# EUROPEAN PATENT APPLICATION

(11) **EP 4 160 931 A1**
(43) Date of publication of application: **05.04.2023**
(21) Application number: 21817317.7
(22) Date of filing: 30.03.2021
(51) Int. Cl.: H04B 7/0413, H04W 16/28

(54) **3D-MIMO ANTENNA PARAMETER DETERMINATION METHOD, 3D-MIMO ANTENNA, BASE STATION, ELECTRONIC DEVICE, AND COMPUTER-READABLE STORAGE MEDIUM**

(30) Priority: 03.06.2020 CN 202010494454
(71) Applicant: ZTE Corporation, Shenzhen, Guangdong 518057 (CN)
(72) Inventor: LI, Bin, Shenzhen, Guangdong 518057 (CN); ZENG, Zhaohua, Shenzhen, Guangdong 518057 (CN)
(74) Representative: Canzler & Bergmeier Patentanwälte Partnerschaft mbB
(86) International application number: PCT/CN2021/083710
(87) International publication number: WO 2021/244112

(57) **Abstract**

Provided is a 3D-MIMO antenna parameter determination method, the method comprising: receiving a coverage requirement and parameters of radiation array elements of a three-dimensional multiple-input multiple-output (3D-MIMO) antenna; and according to the coverage requirement, and the parameters of the radiation array elements of the 3D-MIMO antenna, determining the angles of radiation faces of the radiation array elements, wherein there are included angles between radiation faces of at least some radiation array elements and the vertical dimensional direction of the 3D-MIMO antenna. Further provided are a 3D-MIMO antenna, a base station, an electronic device, and a computer-readable storage medium.

## Description

### CROSS-REFERENCE TO RELATED APPLICATION

This application claims priority from Chinese patent application No. 202010494454.4 filed on June 3, 2020, the entirety of which is incorporated hereby by reference.

### TECHNICAL FIELD

The present disclosure relates to the field of communication devices, and in particular, relates to a method for determining a parameter of a 3D-MIMO antenna, a 3D-MIMO antenna, a base station, an electronic device, and a computer-readable storage medium.

### BACKGROUND

Nowadays, with the rapid development of wireless communication technology, access to the internet anytime and anywhere has become one of the greatest demands of people.

At present, internet access is already available on vehicles such as automobiles, trains and high-speed rails, but passengers on other vehicles, such as aircrafts and ships, still cannot ideally access the internet.

### SUMMARY

The present disclosure provides a method for determining a parameter of a 3D multi-input multi-output (3D-MIMO) antenna, including: receiving a coverage requirement and a parameter of each radiation element of the 3D-MIMO antenna; and determining, according to the coverage requirement, and the parameter of each radiation element of the 3D-MIMO antenna, an angle of a radiation surface of each radiation element, where an included angle is formed between each radiation surface of at least part of radiation elements and a direction of a vertical dimension of the 3D-MIMO antenna.

In an implementation, the 3D-MIMO antenna includes N sub-arrays arranged in the vertical dimension, each sub-array includes multiple radiation elements arranged in a horizontal dimension, the coverage requirement includes a coverage above a base station provided with the 3D-MIMO antenna; the determining, according to the coverage requirement, and the parameter of each radiation element of the 3D-MIMO antenna, an angle of a radiation surface of each radiation element includes: determining the included angle between the radiation surface of each radiation element of first M sub-arrays from top to bottom in the direction of the vertical dimension of the 3D-MIMO antenna and the direction of the vertical dimension of the 3D-MIMO antenna to be a first preset angle rotated in a counter-clockwise direction from the direction of the vertical dimension, where 1≤M<N, M and N are positive integers, and N>1.

In an implementation, in the coverage requirement, a coverage angle of coverage in the vertical dimension ranges from 60° to 90°.

In an implementation, N is equal to 4, each sub-array includes 8 radiation elements, and in the coverage requirement, the coverage angle of coverage in the vertical dimension ranges from 80° to 90°, and the determining, according to the coverage requirement, and the parameter of each radiation element of the 3D-MIMO antenna, an angle of a radiation surface of each radiation element includes: determining M to be equal to 1 or 2, and the first preset angle ranging from 40° to 50°.

In an implementation, the 3D-MIMO antenna includes N sub-arrays arranged in the vertical dimension, each sub-array includes multiple radiation elements arranged in a horizontal dimension, the coverage requirement includes a coverage below a base station provided with the 3D-MIMO antenna, the determining, according to the coverage requirement, and the parameter of each radiation element of the 3D-MIMO antenna, an angle of a radiation surface of each radiation element includes: determining the included angle between the radiation surface of each radiation element of first M sub-arrays from bottom to top in the direction of the vertical dimension of the 3D-MIMO antenna and the direction of the vertical dimension to be a second preset angle rotated in a clockwise direction from the direction of the vertical dimension, where 1≤M<N, M and N are positive integers, and N>1.

In an implementation, in the coverage requirement, a coverage angle of coverage in the vertical dimension ranges from 60° to 90°.

In an implementation, in the coverage requirement, the coverage angle of coverage in the vertical dimension ranges from 80° to 90°, and N is equal to 8, M is equal to 4, and the second preset angle ranges from 40° to 50°.

In an implementation, the method further includes: determining, according to the coverage requirement and the angle of the radiation surface of each radiation element, an electronic inclination of the radiation element.

The present disclosure further provides a 3D multi-input multi-output (3D-MIMO) antenna, including a plurality of radiation elements, and an included angle is formed between each radiation surface of at least part of the radiation elements and a direction of a vertical dimension of the 3D-MIMO antenna.

In an implementation, the 3D-MIMO antenna includes N sub-arrays arranged in the vertical dimension, each sub-array includes multiple radiation elements arranged in a horizontal dimension, an included angle between the radiation surface of each radiation element of first M sub-arrays from top to bottom in the direction of the vertical dimension of the 3D-MIMO antenna and the direction of the vertical dimension of the 3D-MIMO antenna is equal to a first preset angle rotated in a counter-clockwise direction from the direction of the vertical dimension, where 1≤M<N, M and N are positive integers, and N>1.

In an implementation, N is equal to 4, each sub-array includes 8 radiation elements, M is equal to 1 or 2, and the first preset angle ranges from 40° to 50°.

In an implementation, the 3D-MIMO antenna includes N sub-arrays arranged in the vertical dimension, each sub-array includes multiple radiation elements arranged in a horizontal dimension, an included angle between the radiation surface of each radiation element of first M sub-arrays from bottom to top in the direction of the vertical dimension of the 3D-MIMO antenna and the direction of the vertical dimension of the 3D-MIMO antenna is equal to a second preset angle rotated in a clockwise direction from the direction of the vertical dimension, where 1≤M<N, M and N are positive integers, and N>1.

In an implementation, N is equal to 8, M is equal to 4, and the second preset angle ranges from 40° to 50°.

The present disclosure further provides a base station, including a base station body and a 3D-MIMO antenna, where the 3D-MIMO antenna is the 3D-MIMO antenna according to the present disclosure.

The present disclosure further provides an electronic device, including: at least one processor; a memory storing at least one program thereon, the program, when executed by the at least one processor, causes the at least one processor to implement the method for determining the parameter according to the present disclosure; and at least one I/O interface connected between the at least one processor and the memory, and configured to enable information interaction between the at least one processor and the memory.

The present disclosure further provides a computer-readable medium storing a computer program thereon, the computer program, when executed by a processor, causes the method for determining the parameter according to the present disclosure to be implemented.

### BRIEF DESCRIPTION OF DRAWINGS

FIG. 1 is a flowchart of a method for determining a parameter according to the present disclosure;
FIG. 2 is a schematic diagram of a 3D-MIMO antenna according to the present disclosure;
FIG. 3 is a schematic diagram of an arrangement of radiation elements in a vertical dimension of a 3D-MIMO antenna in the existing art;
FIG. 4 is a schematic diagram of an arrangement of radiation elements in a vertical dimension of a 3D-MIMO antenna according to the present disclosure;
FIG. 5 is a schematic diagram of signal coverage of a base station including the 3D-MIMO antenna shown in FIG. 4 according to the present disclosure;
FIG. 6 is a schematic diagram of an arrangement of radiation elements in a vertical dimension of a 3D-MIMO antenna according to the present disclosure;
FIG. 7 is a schematic diagram of signal coverage of a base station including the 3D-MIMO antenna shown in FIG. 5 according to the present disclosure;
FIG. 8 is a schematic diagram of an arrangement of radiation elements in a vertical dimension of a 3D-MIMO antenna according to the present disclosure; and
FIG. 9 is a schematic diagram of signal coverage of a base station including the 3D-MIMO antenna shown in FIG. 8 according to the present disclosure.

### DETAIL DESCRIPTION OF EMBODIMENTS

To improve understanding of the technical solution of the present disclosure for those skilled in the art, the technical solution of the present disclosure will be described below in detail in conjunction with the accompanying drawings.

Exemplary embodiments will be described more sufficiently below with reference to the accompanying drawings, but they may be embodied in different forms and should not be construed as restrictive. Rather, these embodiments are provided so that the present disclosure will be thorough and complete, and will fully convey the scope of the present disclosure to those skilled in the art.

Embodiments of the present disclosure and features thereof may be combined with each other without conflict.

As used herein, the term "and/or" means any and all combinations of the associated listed items.

The terminology used herein is for the purpose of describing the exemplary embodiments only and is not intended to limit the present disclosure. As used herein, the singular forms "a", "an" and "the" are intended to include the plural forms as well, unless the context clearly indicates otherwise. It will be further understood that as used herein, the terms "comprise/include" and/or "consist of ..." indicate the presence of related features, integers, steps, operations, elements, and/or components, but do not preclude the presence or addition of one or more other features, entities, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the related art and the present disclosure, and will not be interpreted in an idealized or overly formal sense unless expressly so defined herein.

For a type of terminal moving at a high speed (about 800km/h to about 1200km/h), such as an aircraft, if a cell coverage distance (typically within 5km) of a conventional wireless communication system is used, cell handover may occur frequently, leading to degraded performance of the communication system. To enable internet access on the aircraft, the cell coverage distance is desired to exceed at least 100 km. However, such expectation has exceeded the coverage of a 3D multi-input multi-output (3D-MIMO) antenna in the existing art on the ground.

For a civil aircraft at a flight altitude of about 10km, to achieve a cell coverage radius of about 300km, a vertical dimension of an antenna of a base station is desired to cover a range from about 2° to 90°. If the curvature of the Earth or the like is further considered, the vertical dimension of the antenna of the base station is desired to cover an entire range from 0° to 90°.

In the existing art, in order to ensure a gain of the antenna (especially the 3D-MIMO antenna), a coverage angle in the vertical dimension of the antenna is generally less than about 60° (i.e., no signal is directly above the base station), which cannot satisfy an expectation on an air coverage of a wireless system.

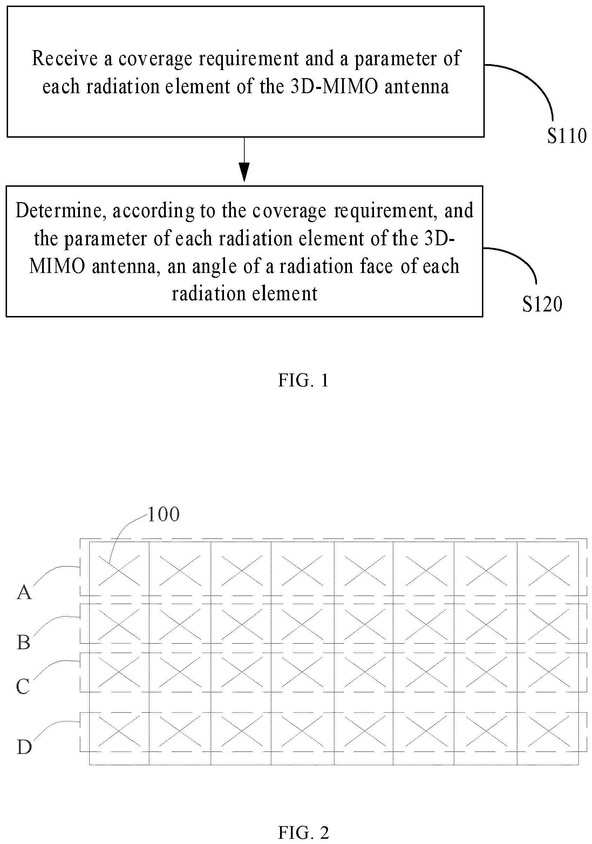

An embodiment of the present disclosure provides a method for determining a parameter of a 3D multi-input multi-output (3D-MIMO) antenna, as shown in FIG. 1, the method includes the following operations S110 to S120. At operation S110, a coverage requirement and a parameter of each radiation element of the 3D-MIMO antenna are received. At operation S120, according to the coverage requirement, and the parameter of each radiation element of the 3D-MIMO antenna, an angle of a radiation surface of each radiation element is determined, and an included angle is formed between each radiation surface of at least part of radiation elements and a direction of a vertical dimension of the 3D-MIMO antenna.

The 3D-MIMO antenna typically includes a plurality of radiation elements, and each radiation element has the radiation surface for transmitting or receiving signals. After the angle of the radiation surface of each radiation element is determined, during manufacturing the 3D-MIMO antenna, each radiation element may be set according to the angle of the radiation surface of the radiation element determined in operation S120, so that in the 3D-MIMO antenna, the included angle is formed between each radiation surface of at least part of radiation elements and the direction of the vertical dimension of the 3D-MIMO antenna.

For each radiation element, the strongest signal intensity occurs in a normal direction of the radiation surface, and the weakest signal intensity occurs in a tangential direction of the radiation surface.

In some implementations, the type of the coverage requirement is not particularly limited. The coverage requirement may include a coverage radius, a coverage angle in the vertical dimension, and the like.

In some implementations, the included angle is formed between each radiation surface of at least part of radiation elements and the direction of the vertical dimension of the 3D-MIMO antenna, so that these radiation elements each have a normal direction different from that of any other radiation element. As a result, the coverage angle in the vertical dimension of the 3D-MIMO antenna can be increased, and a coverage boundary of the 3D-MIMO antenna can be extended. Therefore, the coverage requirement on a mobile communication network, such as an air coverage or a sea coverage, can be satisfied without cell handover, and thus access to the internet for users on a vehicle (such as an aircraft or ship) is guaranteed to be stable.

In some implementations, the angle of each radiation surface of at least part of radiation elements is design to complement an electronic inclination of each radiation element, so as to increase the coverage angle in the vertical dimension of the 3D-MIMO antenna.

In some implementations, the parameter of each radiation element for determining the angle of the radiation element is not particularly limited. For example, the parameter may include a number of the radiation elements, an arrangement of the radiation elements, a gain requirement of the radiation elements, a beam width of the 3D-MIMO antenna, and the like.

In some implementations, forms of the coverage requirement and the parameter of each radiation element received are not particularly limited. An identifier 0001 may be used to indicate a coverage above the base station (i.e., an air coverage), and an identifier 0010 may be used to indicate a coverage below the base station (i.e., a sea coverage). The parameter of each radiation element may be represented by a specific parameter value.

In some implementations, a structure of the 3D-MIMO antenna is not particularly limited. For example, the 3D-MIMO antenna may include N sub-arrays arranged in the vertical dimension, and each sub-array includes multiple radiation elements arranged in a horizontal dimension.

For the coverage requirement of the air coverage, the coverage requirement includes a coverage above the base station provided with the 3D-MIMO antenna, which requires the coverage angle in the vertical dimension reaching a certain angle (for example, ranging from 60° to 90°), and if the coverage angle in the vertical dimension reaches the certain angle, signal coverage is achieved in a certain range directly above the base station.

Correspondingly, in operation S120, an included angle between the radiation surface of each radiation element of first M sub-arrays from top to bottom in the direction of the vertical dimension of the 3D-MIMO antenna and the direction of the vertical dimension of the 3D-MIMO antenna is determined to be a first preset angle rotated in a counter-clockwise direction from the direction of the vertical dimension, where 1≤M<N, M and N are positive integers, and N>1.

In the existing art, the coverage angle in the vertical dimension of the 3D-MIMO antenna does not exceed 60°, resulting in no signal coverage directly above the base station. In the present disclosure, after the radiation surface of the radiation element in a top layer of the 3D-MIMO antenna is rotated in the counter-clockwise, the normal direction of the radiation element may be inclined toward the sky. By incorporating with adjusting the electronic inclination, the coverage angle in the vertical dimension can range from 60° to 90°.

In some implementations, the structure of the 3D-MIMO antenna is not particularly limited. For example, as shown in FIG. 2, N for the 3D-MIMO antenna is equal to 4, that is, the 3D-MIMO antenna includes 4 sub-arrays (A, B, C and D), and each sub-array includes 8 radiation elements.

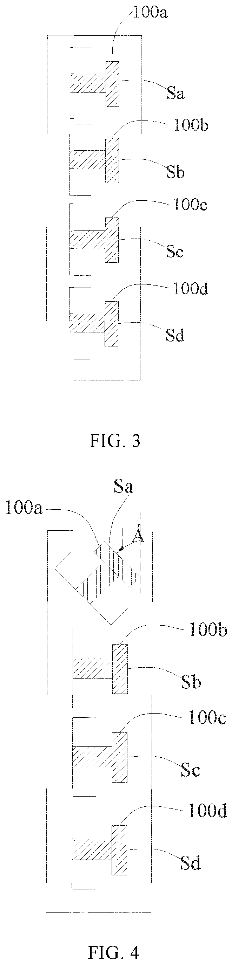

In the 3D-MIMO antenna and along the direction of the vertical dimension from top to bottom (i.e., a vertical direction in FIGs. 3 and 4), each radiation element in a first layer is denoted by 100a, each radiation element in a second layer is denoted by 100b, each radiation element in a third layer is denoted by 100c, and each radiation element in a fourth layer is denoted by 100d. The radiation element 100a has a radiation surface Sa, the radiation element 100b has a radiation surface Sb, the radiation element 100c has a radiation surface Sc, and the radiation element 100d has a radiation surface Sd. FIG. 3 shows a 3D-MIMO antenna in the existing art, in which the normal direction of each radiation element is a horizontal direction. In the case shown in FIG. 3, the coverage angle in the vertical dimension of the 3D-MIMO antenna does not exceed 60°.

If the coverage angle in the vertical dimension in the coverage requirement of the vertical dimension ranges from 80° and 90°, in operation S120, M may be selected to be equal to 1 or 2, and the first preset angle α may be selected in a range from 40° to 50°.

In some implementations, a value of M may be selected as desired. The larger the value of M is, a larger number of beams are generated by the 3D-MIMO antenna, and the smaller the value of M is, a smaller number of beams are generated by the 3D-MIMO antenna.

FIG. 4 shows a case where M is equal to 1 and the first preset angle α is equal to 45°. Specifically, in the direction of the vertical dimension, the radiation surface Sa of the radiation element 100a in the first layer is rotated by 45° in the counter-clockwise direction from the direction of the vertical dimension. In such implementation, the base station including the 3D-MIMO antenna has a coverage angle of 90° in the vertical dimension, and produces signals that cover both directly above the base station and a space with a coverage radius of about 300km.

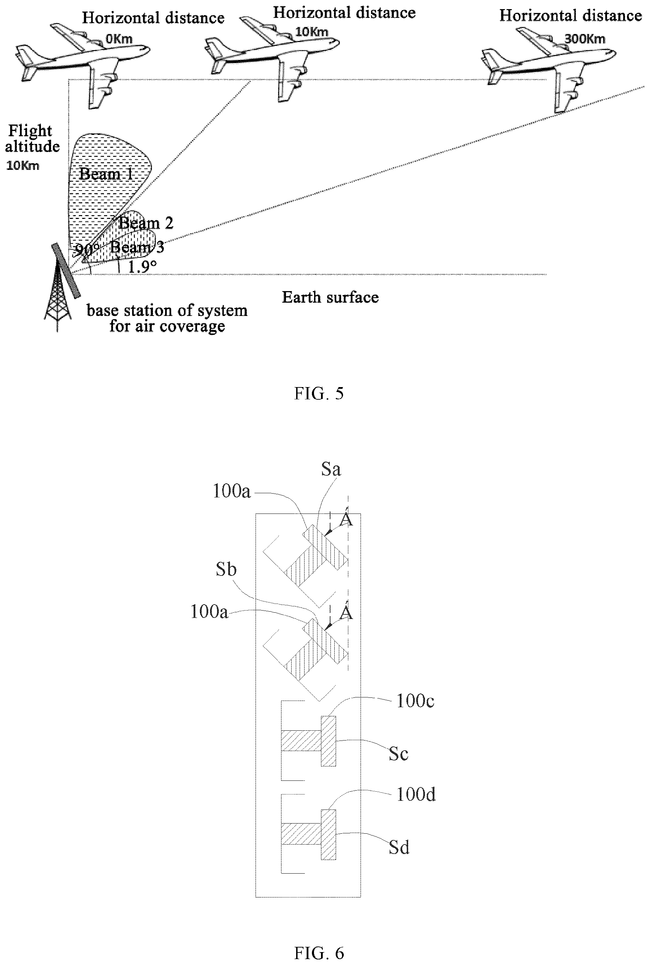

As shown in FIG. 5, the 3D-MIMO antenna generates three beams, including a beam 1, a beam 2, and a beam 3, and can implement a cell having a coverage radius of about 300km. In addition, the beam 1 can cover an area directly above the base station, so that access to the internet desired by a civil aircraft at a flight altitude of about 10km can be satisfied. Specifically, if the aircraft is at the flight altitude of about 10km and in the area directly above the base station, it is covered by the beam 1; if the aircraft flies to be distant from the base station by a horizontal distance ranging from about 2km to about 10km, it is covered by the beam 2; and if the aircraft flies to be distant from the base station by a horizontal distance ranging from about 10km to about 300km, it is covered by the beam 3.

In the implementation shown in FIG. 6, M is equal to 2, that is, radiation surfaces of the radiation elements in first two layers from top to bottom are determined to be rotated in the counter-clockwise direction from the direction of the vertical dimension by the first preset angle α.

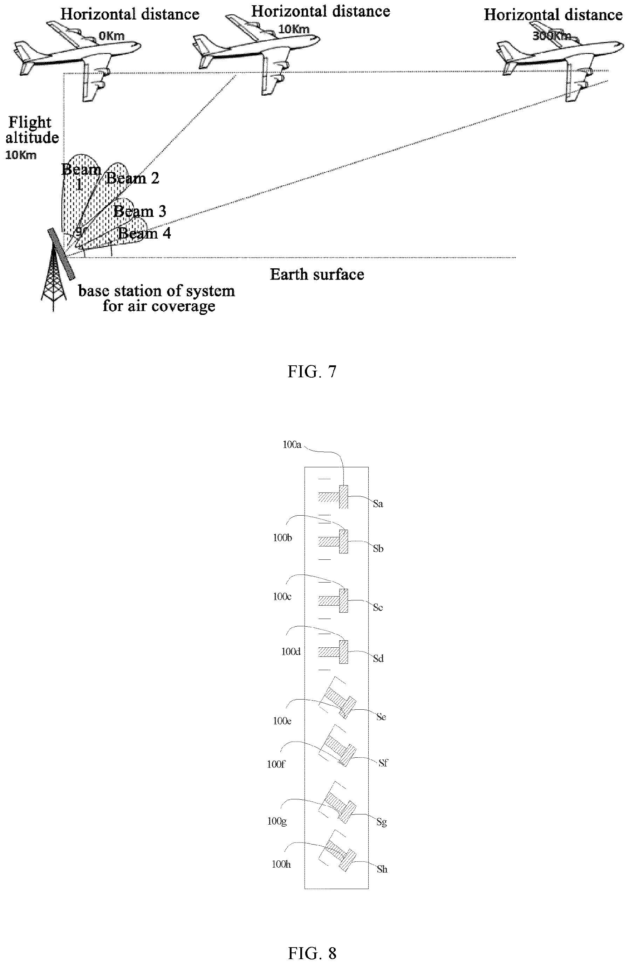

In some implementations, in the direction of the vertical dimension, the radiation surface Sa of the radiation element 100a in the first layer is rotated by 45° in the counter-clockwise direction from the direction of the vertical dimension, and the radiation surface Sb of the radiation element 100b in the second layer is rotated by 45° in the counter-clockwise direction from the direction of the vertical dimension. In such implementation, the base station including the 3D-MIMO antenna has a coverage angle of 90° in the vertical dimension, and as shown in FIG. 7, produces signals that cover both directly above the base station and a space with a coverage radius of about 300km. Specifically, if the aircraft is at the flight altitude of about 10km and in the area directly above the base station, it is covered by the beam 1; if the aircraft flies to be distant from the base station by a horizontal distance ranging from about 2km to about 10km, it is covered by the beam 2 and the beam 3; and if the aircraft flies to be distant from the base station by a horizontal distance ranging from about 10km to about 300km, it is covered by the beam 4.

In some implementations, the radiation elements are dual-polarized radiation elements such that the 3D-MIMO antenna is a 64-port 3D-MIMO antenna having 64 ports. In other words, the 3D-MIMO antenna has 4 ports in the vertical dimension (denoted by V), 8 ports in the horizontal dimension (denoted by H), and 2 ports in dual polarization (denoted by P), and a total number of the ports is equal to 4(V)×8(H)×2(P)=64. Certainly, the 3D-MIMO antenna may be a 32-port 3D-MIMO antenna having 32 ports.

To achieve signal coverage over the sea (i.e., the see coverage), the base station is typically positioned on a mountain near the sea. In order to make signals exist directly below the base station, correspondingly, the coverage requirement includes a coverage below the base station provided with the 3D-MIMO antenna, so that the coverage angle in the vertical dimension of the 3D-MIMO antenna reaches a certain angle (for example, the coverage angle in the vertical dimension ranges from 60° to 90°).

Correspondingly, in operation S120, the included angle between the radiation surface of each radiation element of first M sub-arrays from bottom to top in the direction of the vertical dimension of the 3D-MIMO antenna and the direction of the vertical dimension (i.e., the vertical direction) is determined to be the second preset angle rotated in a clockwise direction from the vertical direction, where 1≤M<N, M and N are positive integers, and N>1.

The radiation surface of the radiation element in a lower layer in the 3D-MIMO antenna being rotated in the clockwise direction from the vertical direction by the second preset angle, is equivalent to that the radiation surface of the radiation element is tilted downward, which means that the normal direction of the radiation surface of the radiation element is closer to a position directly below the base station, so that the coverage angle in the vertical dimension of the 3D-MIMO antenna is increased.

In an implementation, in the coverage requirement, the coverage angle in the vertical dimension ranges from 80° to 90°, and N is equal to 8, M is equal to 4, and the second preset angle is selected in a range from 40° to 50°.

In the implementation shown in FIG. 8, an array in the vertical dimension of the 3D-MIMO antenna includes eight sub-arrays. Specifically, from bottom to top in the direction of the vertical dimension, the radiation elements in the eight sub-arrays are denoted by 100h, 100g, 100f, 100e, 100d, 100c, 100b, 100a, respectively. The radiation element 100a has a radiation surface Sa, the radiation element 100b has a radiation surface Sb, the radiation element 100c has a radiation surface Sc, the radiation element 100d has a radiation surface Sd, the radiation element 100e has a radiation surface Se, the radiation element 100f has a radiation surface Sf, the radiation element 100g has a radiation surface Sg, and the radiation element 100h has a radiation surface Sh.

Each of radiation surfaces of the radiation elements in four sub-arrays in lower layers (i.e., the radiation surface Sh of radiation element 100h, the radiation surface Sg of the radiation element 100g, the radiation surface Sf of the radiation element 100f, and the radiation surface Se of the radiation element 100e) is rotated in the clockwise direction from the direction of the vertical dimension by the second preset angle β.

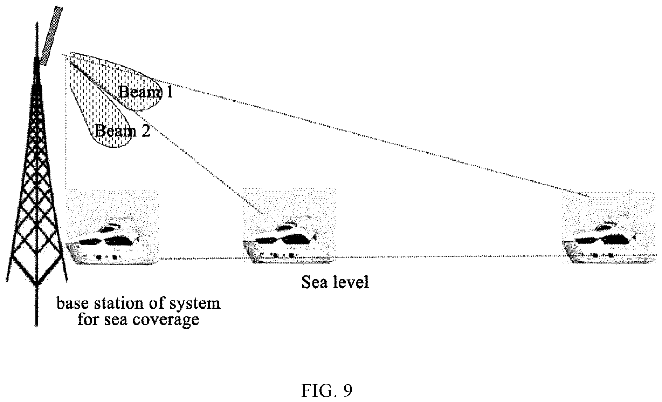

If the 3D-MIMO antenna shown in FIG. 8 is applied to a scenario of FIG. 9, the sea coverage of 90° in the vertical dimension can be achieved.

To facilitate arranging, in an implementation, the second preset angle may be 45°.

As described above, in addition to determining the angle of the radiation surface of each radiation element, the coverage angle of 90° in the vertical dimension may be achieved by adjusting the electronic inclination of the radiation element.

In some implementations, how to determine the electronic inclination of each radiation element is not particularly limited. For example, after the angle of the radiation surface of each radiation element is set, a simulation of an antenna may be performed to adjust the electronic inclination of each radiation element, and in response to that the coverage angle in the vertical dimension reaches 60° to 90°, adjusting the electronic inclination of each radiation element is stopped, and the electronic inclination at that time is recorded.

In some implementations, a phase shifter corresponding to the radiation element may be configured to adjust a weight to form a beam, and the electronic inclination of the radiation element may be adjusted according to a capability of electrical tuning.

In the present disclosure, with the method for determining the parameter, the angle of the radiation surface of each radiation element in the 3D-MIMO can be determined, and in the 3D-MIMO antenna, the included angle is formed between each radiation surface of at least part of the radiation elements and the direction of the vertical dimension of the 3D-MIMO antenna, so that these radiation elements each have a normal direction different from that of any other radiation element. As a result, a coverage dimension (especially, the coverage angle in the vertical dimension) of the 3D-MIMO antenna can be increased, and the coverage requirement on a mobile communication network, such as an air coverage or a sea coverage, can be satisfied without cell handover, and thus access to the internet for users on a vehicle (such as an aircraft or ship) can be guaranteed to be stable.

An embodiment of the present disclosure further provides a 3D-MIMO antenna, and as shown in FIGs. 2 and 3, the 3D-MIMO antenna includes a plurality of radiation elements 100, and an included angle is formed between each radiation surface of at least part of the radiation elements 100 and a direction of a vertical dimension of the 3D-MIMO antenna.

As described above, for each radiation element, the strongest signal intensity occurs in a normal direction of the radiation surface, and the weakest signal intensity occurs in a tangential direction of the radiation surface.

In some implementations, the included angle is formed between each radiation surface of at least part of radiation elements and the direction of the vertical dimension of the 3D-MIMO antenna, so that these radiation elements each have a normal direction different from that of any other radiation element. As a result, the coverage angle in the vertical dimension of the 3D-MIMO antenna can be increased, and the coverage requirement on a mobile communication network, such as an air coverage or a sea coverage, can be satisfied.

In some implementations, an angle of each radiation surface of at least part of radiation elements is design to complement an electronic inclination of each radiation element, so as to increase the coverage angle of the vertical dimension of the 3D-MIMO antenna.

In some implementations, an arrangement of the radiation elements in the 3D-MIMO antenna is not particularly limited. In an implementation, the 3D-MIMO antenna includes N sub-arrays arranged in the vertical dimension, and each sub-array includes multiple radiation elements 100 arranged in a horizontal dimension.

In order to achieve a coverage above the base station provided with the 3D-MIMO antenna and a coverage angle ranging from 60° to 90° in the vertical dimension, in an implementation, the included angle between the radiation surface of each radiation element of first M sub-arrays from top to bottom in the direction of the vertical dimension of the 3D-MIMO antenna and the direction of the vertical dimension of the 3D-MIMO antenna is equal to a first preset angle rotated in a counter-clockwise direction from the direction of the vertical dimension, where 1≤M<N, M and N are positive integers, and N>1.

In an implementation, N is equal to 4, that is, the 3D-MIMO antenna includes 4 sub-arrays, each sub-array includes 8 radiation elements, where M is equal to 1 or 2, and the first preset angle is selected in a range from 40° to 50°.

In an implementation, the radiation elements are dual-polarized radiation elements, such that the 3D-MIMO antenna is a 64-port 3D-MIMO antenna having 64 ports.

Certainly, the present disclosure is not limited thereto, and the 3D-MIMO antenna may be a 32-port 3D-MIMO antenna having 32 ports.

In order to achieve a coverage below the base station provided with the 3D-MIMO antenna and a coverage angle ranging from 60° to 90° in the vertical dimension, the included angle between the radiation surface of each radiation element of first M sub-arrays from bottom to top in the direction of the vertical dimension of the 3D-MIMO antenna and the direction of the vertical dimension of the 3D-MIMO antenna is equal to a second preset angle rotated in a clockwise direction from the direction of the vertical dimension, where 1≤M<N, M and N are positive integers, and N>1.

As shown in FIG. 8, N is equal to 8, M is equal to 4, and the second preset angle is selected in a range from 40° to 50°.

In some implementations, a structure of the 3D-MIMO antenna, other than the radiation elements, is not particularly limited. In an implementation, the 3D-MIMO antenna may further include a power splitter, a digital phase shifter, a control circuit, a power distribution network, or the like.

An embodiment of the present disclosure further provides a base station, including a base station body and a 3D-MIMO antenna, and the 3D-MIMO antenna is the 3D-MIMO antenna of the present disclosure as described above.

The operation principle and beneficial effects of the base station including the 3D-MIMO antenna have been described in detail above, and are not repeated here.

An embodiment of the present disclosure further provides an electronic device, including: at least one processor; a memory storing at least one program thereon, the program, when executed by the at least one processor, causes the at least one processor to implement the method for determining the parameter of the present disclosure as described above; and at least one I/O interface connected between the at least one processor and the memory, and configured to enable information interaction between the at least one processor and the memory.

In some implementations, the processor is a device with a data processing capability, including but not limited to, a central processing unit (CPU), or the like; the memory is a device with a data storage capability including but not limited to, a random access memory (RAM, more specifically SDRAM, DDR, etc.), a read-only memory (ROM), an electrically erasable programmable read-only memory (EEPROM) or a flash memory (FLASH); and the I/O interface (read/write interface) is connected between the processor and the memory to enable information interaction between the processor and the memory, and includes, but is not limited to, a bus or the like.

In some implementations, the processor, the memory, and the I/O interface are interconnected via a bus, and further connected to other components of a computing device.

In some implementations, for inputting various parameters into the electronic device, different identifiers may be used to identify different types of coverage requirements. For example, an identifier 0001 may be used to indicate a coverage above the base station (i.e., an air coverage), and an identifier 0010 may be used to indicate a coverage below the base station (i.e., a sea coverage).

An embodiment of the present disclosure further provides a computer-readable medium storing a computer program thereon, the computer program, when executed by a processor, causes the method for determining the parameter of the present disclosure as described above to be implemented.

Those of ordinary skill in the art will appreciate that all or some operations of the method described above, functional modules/units in the system or apparatus may be implemented as software, firmware, hardware, or suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash memory, a CD-ROM, a digital versatile disc (DVD), a magnetic cartridge, a magnetic tape, or any other media which can be used to store the desired information and accessed by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made without departing from the scope of the present disclosure as set forth in the appended claims.

## Claims

1. A method for determining a parameter of a 3D multi-input multi-output (3D-MIMO) antenna, comprising:
receiving a coverage requirement and a parameter of each radiation element of the 3D-MIMO antenna; and
determining, according to the coverage requirement, and the parameter of each radiation element of the 3D-MIMO antenna, an angle of a radiation surface of each radiation element, where an included angle is formed between each radiation surface of at least part of radiation elements and a direction of a vertical dimension of the 3D-MIMO antenna.

2. The method according to claim 1, wherein the 3D-MIMO antenna comprises N sub-arrays arranged in the vertical dimension, and each sub-array comprises multiple radiation elements arranged in a horizontal dimension,
the coverage requirement comprises a coverage above a base station provided with the 3D-MIMO antenna;
determining, according to the coverage requirement, and the parameter of each radiation element of the 3D-MIMO antenna, the angle of the radiation surface of each radiation element comprises: determining the included angle between the radiation surface of each radiation element of first M sub-arrays from top to bottom in the direction of the vertical dimension of the 3D-MIMO antenna and the direction of the vertical dimension of the 3D-MIMO antenna to be a first preset angle rotated in a counter-clockwise direction from the direction of the vertical dimension, where 1≤M<N, M and N are positive integers, and N>1.

3. The method according to claim 2, wherein in the coverage requirement, a coverage angle in the vertical dimension ranges from 60° to 90°.

4. The method according to claim 3, wherein N is equal to 4, each sub-array comprises 8 radiation elements, and in the coverage requirement, the coverage angle in the vertical dimension ranges from 80° to 90°, and the determining, according to the coverage requirement, and the parameter of each radiation element of the 3D-MIMO antenna, an angle of a radiation surface of each radiation element comprises: determining that M is equal to 1 or 2, and each first preset angle ranges from 40° to 50°.

5. The method according to claim 1, wherein the 3D-MIMO antenna comprises N sub-arrays arranged in the vertical dimension, each sub-array comprises multiple radiation elements arranged in the horizontal dimension,
the coverage requirement comprises a coverage below a base station provided with the 3D-MIMO antenna,
the determining, according to the coverage requirement, and the parameter of each radiation element of the 3D-MIMO antenna, an angle of a radiation surface of each radiation element comprises: determining the included angle between the radiation surface of each radiation element of first M sub-arrays from bottom to top in the direction of the vertical dimension of the 3D-MIMO antenna and the direction of the vertical dimension to be a second preset angle rotated in a clockwise direction from the direction of the vertical dimension, where 1≤M<N, M and N are positive integers, and N>1.

6. The method according to claim 5, wherein in the coverage requirement, a coverage angle in the vertical dimension ranges from 60° to 90°.

7. The method according to claim 5, wherein in the coverage requirement, a coverage angle in the vertical dimension ranges from 80° to 90°, N is equal to 8, M is equal to 4, and the second preset angle ranges from 40° to 50°.

8. The method according to any one of claims 1 to 7, further comprising:
determining, according to the coverage requirement and the angle of the radiation surface of each radiation element, an electronic inclination of each radiation element.

9. A 3D multi-input multi-output (3D-MIMO) antenna, comprising a plurality of radiation elements, wherein an included angle is formed between each radiation surface of at least part of radiation elements and a direction of a vertical dimension of the 3D-MIMO antenna.

10. The 3D-MIMO antenna according to claim 9, wherein the 3D-MIMO antenna comprises N sub-arrays arranged in the vertical dimension, each sub-array comprises multiple radiation elements arranged in a horizontal dimension, an included angle between the radiation surface of each radiation element of first M sub-arrays from top to bottom in the direction of the vertical dimension of the 3D-MIMO antenna and the direction of the vertical dimension of the 3D-MIMO antenna is equal to a first preset angle rotated in a counter-clockwise direction from the direction of the vertical dimension, where 1≤M<N, M and N are positive integers, and N>1.

11. The 3D-MIMO antenna according to claim 10, wherein N is equal to 4, each sub-array comprises 8 radiation elements, M is equal to 1 or 2, and the first preset angle ranges from 40° to 50°.

12. The 3D-MIMO antenna according to claim 9, wherein the 3D-MIMO antenna comprises N sub-arrays arranged in the vertical dimension, each sub-array comprises multiple radiation elements arranged in a horizontal dimension, an included angle between the radiation surface of each radiation element of first M sub-arrays from bottom to top in the direction of the vertical dimension of the 3D-MIMO antenna and the direction of the vertical dimension of the 3D-MIMO antenna is equal to a second preset angle rotated in a clockwise direction from the direction of the vertical dimension, where 1 ≤M<N, M and N are positive integers, and N>1.

13. The 3D-MIMO antenna according to claim 12, wherein N is equal to 8, M is equal to 4, and the second preset angle ranges from 40° to 50°.

14. A base station, comprising a base station body and a 3D-MIMO antenna, wherein the 3D-MIMO antenna is the 3D-MIMO antenna according to any one of claims 9 to 13.

15. An electronic device, comprising:
at least one processor;
a memory storing at least one program stored thereon, the program, when executed by the at least one processor, causes the at least one processor to implement the method according to any one of claims 1 to 8; and
at least one I/O interface connected between the at least one processor and the memory, and configured to enable information interaction between the at least one processor and the memory.

16. A computer-readable medium storing a computer program thereon, the computer program, when executed by a processor, causes the method according to any one of claims 1 to 8 to be implemented.
